# EUROPEAN PATENT SPECIFICATION

(11) **EP 4 246 907 B1**
(45) Date of publication and mention of the grant of the patent: **21.10.2026**
(21) Application number: 21896533.3
(22) Date of filing: 26.09.2021
(51) Int. Cl.: H04L 41/082, H04L 41/0859, H04L 41/0866, H04W 24/02, H04L 41/0895, G06F 8/65, G06F 9/455, H04L 41/044, H04L 41/5054

(54) **NETWORK SLICE UPGRADING METHOD AND DEVICE**
VERFAHREN UND VORRICHTUNG ZUR AKTUALISIERUNG VON NETZWERK-SLICES
PROCÉDÉ ET DISPOSITIF DE MISE À NIVEAU DE TRANCHE DE RÉSEAU

(30) Priority: 25.11.2020 CN 202011338018
(43) Date of publication of application: 20.09.2023
(73) Proprietor: ZTE Corporation, Shenzhen, Guangdong 518057 (CN)
(72) Inventor: LIU, Feng, Shenzhen, Guangdong 518057 (CN)
(74) Representative: Canzler & Bergmeier Patentanwälte Partnerschaft mbB
(86) International application number: PCT/CN2021/120768
(87) International publication number: WO 2022/111030

(56) References cited:
- WO-A1-2018/089634
- WO-A1-2019/024679
- CN-A- 104 410 672
- CN-A- 105 379 191
- CN-A- 106 982 129
- CN-A- 109 391 482
- CN-A- 110 572 284
- CN-A- 111 399 866
- CN-A- 111 897 543
- US-A1- 2011 099 266
- US-A1- 2018 373 521
- "3rd Generation Partnership Project; Technical Specification Group Services and System Aspects; System architecture for the 5G System (5GS); Stage 2 (Release 15)", 24 September 2020 (2020-09-24), XP052297824, Retrieved from the Internet <URL:https://ftp.3gpp.org/3guInternal/3GPP_ultimate_versions_to_be_transposed/sentToDpc/23501-fb0.zip 23501-fb0.docx> [retrieved on 20200924]
- "Network Functions Virtualisation (NFV); Reliability; Report on Models and Features for End-to-End Reliability", GROUP SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. NFV REL, no. V1.1.1, 1 April 2016 (2016-04-01), 650, route des Lucioles ; F-06921 Sophia-Antipolis ; France , XP014274011
- HUAWEI, HISILICON, CHINA MOBILE: "Description on NF Service Registration", 3GPP DRAFT; S2-170058_NF SERVICE REGISTRATION_V1.2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Spokane, Washington, USA; 20170116 - 20170120, 10 January 2017 (2017-01-10), Mobile Competence Centre ; 650, route des Lucioles ; F-06921 Sophia-Antipolis Cedex ; France , XP051205499

## Description

### TECHNICAL FIELD

The present disclosure relates to the technical field of communication, in particular to a method and a device for upgrade in a network slice.

### BACKGROUND

In 5G communication, Network Slice (NS) is the slicing of the physical network into multiple end-to-end virtual networks as required. Each network slice can meet different types of requirements of, such as massive machine communication requirements, ultra-high reliability and low delay requirement, or enhanced mobile broadband requirements. A network slice can include multiple network slice subnet (NSS), such as a radio access network sub-slice, a core network sub-slice, a bearer network sub-slice, and so on. A network sub-slice can have one or more network functions NFs. And one NF can be dedicated to one network slice or one sub-slice, and can also be shared by multiple network slices or sub-slices at the same time.

Network Slicing Management Function (NSMF) is responsible for the instantiation of network slices and the control and management of their life cycle. Network Slice Subnet Management Function (NSSMF) is responsible for the instantiation of sub-slice and the control and management of life cycle of the sub-slice.

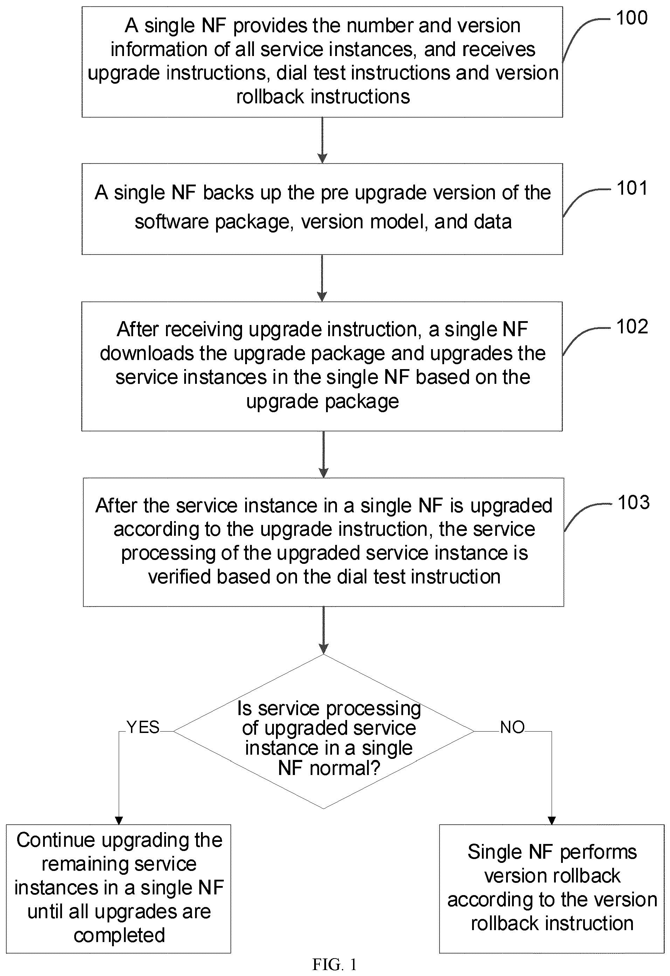

5G NF adopts a service-based architecture. One NF has multiple different types of services. Each type of service can have one or more service instances running, and multiple service instances can share the load. The upgrade of the network slice involves end-to-end network, covering radio access network, core network and bearer network. NFs in many domains needs to be upgraded cooperatively, and the service processing of the entire end-to-end network of network slice shall be prevented from being affected during the upgrade. In the existing technology version upgrade is performed to a single NF merely, as shown in FIG. 1. During the upgrade, the service instances in a single NF can be upgraded once or in stages. However, in some cases, it is unable to achieve the collaborative upgrade of networks in multiple specialties and multiple NFs under network slicing. It is also unable to perform a dial test on the network slice end-to-end to verify the running effect of the new version with low risk during the upgrade, so as to complete all the upgrades after the verification is passed. At the same time, when upgrading a single NF, another NF will be affected in the network slice, resulting in failure in the processing of the end-to-end service of the network slice.

Patent literature (WO 2019024679 A1) relates to a method for upgrading a network function and an upgrade management entity.

Internet publication (3rd Generation Partnership Project Technical Specification Group Services and System Aspects; System architecture for the 5G System (5GS); Stage 2 (Release 15) discloses the 5G system architecture, network slicing and service based network functions.

Patent literature (US 20110099266 A1) is directed to maintaining service performance during a cloud upgrade.

Patent literature (US 20180373521 A1) is directed to Safe and agile rollouts in a network-accessible server infrastructure using slices.

### SUMMARY

In order to alleviate at least one of the above technical problems, the present disclosure provides a method and a device for upgrade in a network slice.

The invention is set out in the appended set of independent claims. Advantageous features are set out in the dependent claims.

The following technical scheme is included in an embodiment of the present disclosure.

The network slice upgrade master control unit inquires the NSMF for the information of the network slice instance and the network sub-slice instance, and inquires the wireless access network NSSMF, the core network NSSMF and the bearer network NSSMF for the information of the network sub-slice instances and NFs respectively, and inquires the version information of all NFs, as well as the types, number and version information of each type of service instances in the NFs. Each NF includes different types of service instances, and different types of service instances handle different services. The network slice upgrade master control unit can show the topology diagram of the attribute relationship of network slices, network sub-slices and NFs, as well as the version information of NF service instances.

The network slice upgrade master control unit can arrange the network slice upgrade plan, the network slice dial test plan and the network slice rollback plan.

The network slice upgrade plan at least includes the upgrade order of each NF in the network slice, the service types that each NF needs to upgrade, and the proportion of service instances of each service type and each version during the upgrade.

The network slice dial test plan at least includes network slice for dial test, users for dial test, services for dial test, NFs for dial test, and service versions for dial test.

The network slice rollback plan at least includes the NF range at which the rollback is performed and the rollback order for each NF.

The network slice upgrade master control unit sends an upgrade instruction to each NF. Each NF downloads an upgrade package and backs up the current version, current model and data. The upgrade instruction carries a preset upgrade proportion. The proxy unit upgrades the service instances on the NFs and reports the progress to the network slice upgrade master control unit.

After each NF upgrades the service instance according to the preset upgrade proportion, the network slice upgrade master control unit issues a network slice dial test instruction to each NF to start end-to-end dial test to verify the service processing of the new version of the service instance in the network slice. If the service dial test verification indicates a normal condition, the network slice upgrade master control unit continues to upgrade the rest of the service instances of NF under the coverage of the network slice until all the upgrades are completed.

If the service dial test verification indicates an abnormal condition, it is necessary to perform network slice version rollback. The network slice upgrade master control unit then issues a network slice version rollback instruction to each NF. And each proxy unit completes each NF version rollback.

In an embodiment of the present disclosure, there is provided a method for upgrade in a network slice, which is applied to each Network Function (NF) in a network slice, according to independent claim 1.

In an embodiment of the present disclosure, there is further provided a device for upgrade in a network slice, according to independent claim 8.

### BRIEF DESCRIPTION OF DRAWINGS

FIG. 1 depicts a flowchart showing a method for upgrading an NF in some situations in the art;
FIG. 2 depicts a flowchart showing a method according to an embodiment of the present disclosure;
FIG. 3 depicts a schematic diagram showing a device according to an embodiment of the present disclosure;
FIG. 4 depicts a schematic diagram showing a device according to an embodiment of the present disclosure;
FIG. 5 depicts a flowchart showing an upgrade to a single NF;
FIG. 6 depicts a flowchart showing an upgrade to the entire network slice;
FIG. 7 depicts a flowchart showing a network slice dial test verification; and
FIG. 8 depicts a flowchart showing network slice version rollback.

### DETAILED DESCRIPTION

The technical scheme of the present disclosure will be illustrated in conjunction with the drawings below. In the description of the present disclosure, it should be understood that the terms "first" and "second" are only illustrative, and it is not intended to be interpreted as indicating or implying relative importance or implicitly indicating the number of indicated technical features, and are only intended to distinguish different components. Throughout the present disclosure, the "first service instance" includes the service instance that needs an upgrade in each NF in the network slice, and the "second service instance" includes the service instance that needs a network slice version rollback in each NF in the network slice.

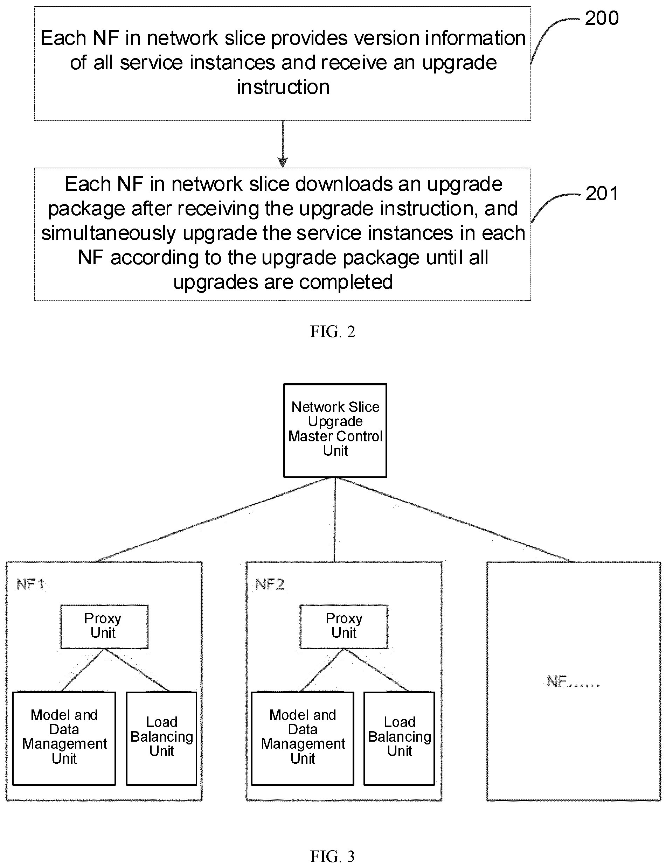

FIG. 2 depicts a flowchart showing a method in an embodiment of the present disclosure. As shown in FIG. 2, each NF in a network slice is configured to, acquire version information of all service instances and receive an upgrade instruction at 200; and to download an upgrade package after receiving the upgrade instruction, and simultaneously upgrade the service instances in each NF according to the upgrade package until all upgrades are completed. The upgrade instruction includes a preset upgrade proportion and an upgrade order.

In an implementation, before the service instance of each NF in the network slice is upgraded, the software package, model and data of the pre-upgrade version of the service instance are backed up.

In an implementation, the acquisition of the version information of all service instances by each NF in a network slice includes: NSMF in the network slice first provides the information of NSSMF instance(s), network slice instance(s) and network sub-slice instance(s). Then NSSMF provides the information of network sub-slice instance and the NF. At last, the NF provides the type, number and version information of all service instances. Generally, the type and number of service instances are intended to determine the upgrade instruction. For example, the preset upgrade proportion is determined according to the number of service instances. An appropriate upgrade proportion as determined can ensure that the current upgrade will not adversely impact the routine service processing.

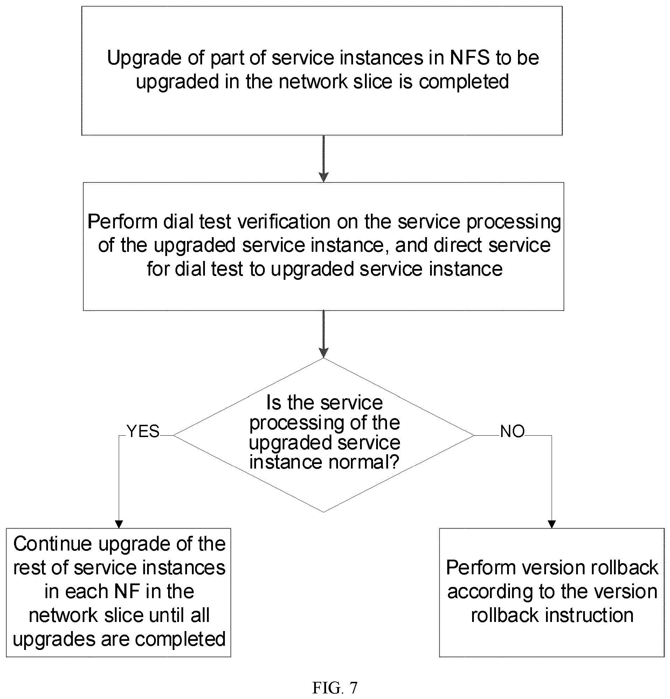

In an implementation, each NF in a network slice also receives a network slice dial test instruction and a network slice version rollback instruction. The service processing situation of the upgraded service instances in each NF in the network slice is verified according to the network slice dial test instruction. If the verification indicates a normal situation, the upgrade of the remaining service instances in each NF is performed in the network slice until all upgrades are completed. If the verification indicates an abnormal situation, each NF in the network slice performs version rollback according to the network slice version rollback instruction. When being carried out, the network slice upgrade and dial test method of the present application will not adversely impact the routine process of the end-to-end service of the network slice. In an implementation, the verification is as follows. After part of the service instances in all NFs that need to be upgraded in the network slice are upgraded, the rest of the service instances are still waiting to be upgraded in the NFs. In such a case, the service processing of the upgraded service instance is verified first. Then, the service is diverted to the upgraded service instance. That is, the dial test service is directed to the upgraded service instance. The verification on the service instance passes when the service instance processes the service properly, as shown in FIG. 7.

FIG. 3 depicts a schematic diagram showing a device in an embodiment of the present disclosure. The device includes a network slice upgrade master control unit, at least two model and data management units and at least two proxy units. The network slice upgrade master control unit is configured to manage the software versions of all NFs in the entire network slice, inquire about the version information of all service instances in all NFs in the network slice, and issue an upgrade instruction, a network slice dial test instruction and a network slice version rollback instruction. The model and data management unit is configured to manage multiple sets of different versions of models and data in a single NF. The proxy unit is configured to manage the versions of a single NF, download the upgrade package after receiving the upgrade instruction, and simultaneously upgrade the service instances in each NF according to the upgrade package. The upgrade instruction includes a preset service instance upgrade proportion. During the upgrade, the progress of the upgrade can be reported to the network slice upgrade master control unit in real-time.

The inquiry of service instance version information in each NF by the network slice upgrade master control unit includes, inquiring to the NSMF the NSSMF instance, network slice instance and network sub-slice instance information, then inquiring to the NSSMF, the network sub-slice instance and NF information, and inquiring to all NFs in the network slice, the type, number and version information of service instances of each type.

The proxy unit is further configured to: verify, after the service instances in each NF are upgraded according to the upgrade instruction, the service processing conditions of the upgraded service instances according to the network slice dial test instruction, and in response to the verification indicating a normal condition, continue to upgrade the rest of the service instances in each NF until the upgrade of each instance is completed; and in response to the verification indicating an abnormal condition, perform version rollback according to the network slice version rollback instruction.

The device also includes at least two load balancing units. The load balancing units are mainly configured to distribute services to service instances in each NF, and transfer and divert the services over the service instances. **In** an implementation, the load balancing units transfer the services on the service instances that need to be upgraded to the service instances that are not to be upgraded temporarily and to the temporary service instances. Alternatively, the load balancing units transfer the services on the temporary service instances to the service instances whose upgrade is completed, or divert the services of the dial test network slices to the upgraded service instances.

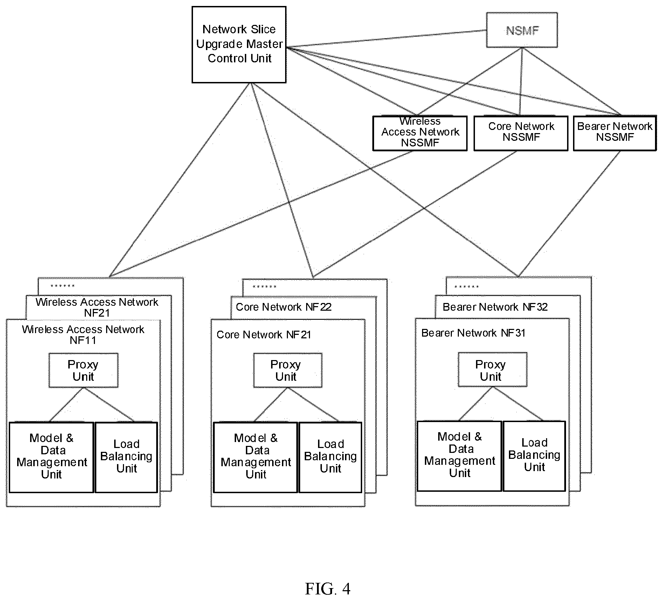

FIG. 4 depicts a device in an embodiment of the present disclosure. As shown in FIG. 4, the network slice upgrade master control unit is connected with an NSMF and an NSSMF. The NSSMF can be classified, by the specialized fields, as a wireless access network NSSMF, a core network NSSMF and a bearer network NSSMF. Each of the wireless access network NSSMF, the core network NSSMF and the bearer network NSSMF includes at least one NF each deployed with an proxy unit, a model and data management unit and a load management unit.

**In** an implementation, the network slice upgrade master control unit can be an independently deployed management system. Alternatively, the network slice upgrade master control unit can be integrated with other management systems. Generally, the proxy unit, the model and data management unit and load balancing unit are collectively deployed on the NF.

**In** an implementation, the preparation of network slice before upgrading includes the following. (1) The network slice upgrade master control unit queries the NSMF to obtain all network slice instance information and network sub-slice instance information in the network. The network slice upgrade master control unit respectively inquires about the wireless access network NSSMF, the core network NSSMF and the bearer network NSSMF to obtain the each network sub-slice instance information and NF information. The network slice upgrade master control unit queries each NF respectively, and obtains the version information of each NF, and the type, number and version information of service instances of each type. Then, the network slice upgrade master control unit displays the topology diagram of attribute relationship of 5G network slice, network sub-slice and NF, and the type, number and version information of each type of service instance in each NF. (2) A network slice upgrade package is uploaded to the network slice upgrade master control unit. The network slice upgrade package includes upgrade packages of each type of NF in the network slice. The network slice instances to be upgraded and the corresponding network slice upgrade packages are selected. (3) The network slice upgrade master control unit parses the upgrade package and automatically selects the NF instance to be upgraded in the network slice. (4) The network slice upgrade master control unit arranges the network slice upgrade plan according to the predetermined rules, including the upgrade order of each NF in the network slice, the service types that each NF needs to upgrade, and the proportion of new and old service instances of various service types during the upgrade. In an implementation, NFs of the data type are upgraded first, then NFs of the service type are upgraded. In another implementation, one NF of a particular type is upgraded first, and then the rest of the NFs of that particular type are upgraded in parallel. In yet another example, the proportion of upgraded service instances is 1:3 before the dial test, and only 1/3 of the service instances are upgraded. After the dial test, the proportion of upgraded service instances is 3:3, that all service instances should be upgraded. If the proportion of upgraded services before the dial test is 2:3, it is necessary to perform verification by dial test after 2/3 of the service instances are upgraded. After the dial test, the proportion of upgraded service instances is 3:3, that all service instances should be upgraded. (5) The network slice upgrade master control unit arranges the network slice dial test plan which includes network slice instances for dial test, a list of NF service instances for dial test, users for dial test, and services for dial test. (6) The network slice upgrade master control unit automatically arranges a rollback plan for failed network slice upgrade according to a predetermined rollback policy, including NF instances needing rollback and the rollback order of each NF. In an example, a partial rollback involves the NFs with failed upgrade. In another example, an entire rollback involves all the NFs with failed upgrade and successful upgrade. In yet another example, a rollback with the reverse order of the upgrade is carried out, in which the last upgraded NF is subject to the first rollback, while the first upgraded NF is subject to the last rollback. (7) The network slice upgrade plan, the network slice dial test plan and the network slice rollback plan are checked on the network slice upgrade master control unit. The network slice upgrade master control unit starts to execute the plans after the plans are confirmed to be correct. (8) The network slice upgrade master control unit sends a pre-upgrade preparation instruction to the proxy unit. The proxy unit downloads the NF upgrade package matched with this NF from the network slice upgrade master control unit, verifies the validity of the upgrade package, and stores the same locally in the proxy unit. The model and data management unit on the NF backs up the currently running pre-upgrade version files, models and data, so as to prepare for version rollback in case of an abnormal condition.

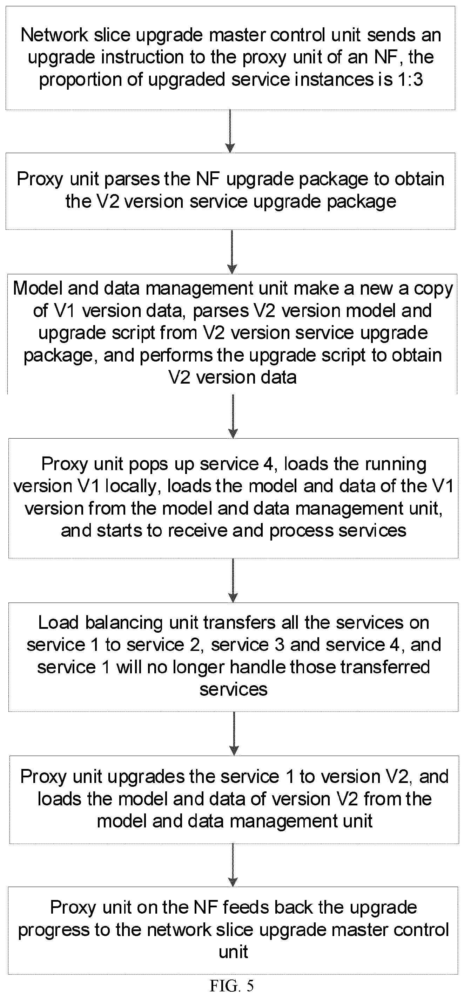

FIG. 5 depicts a flow chart showing upgrade of a single NF. In each NF, multiple service instances of the same type are operating in a load sharing manner. The upgrade procedure from version V1 to version V2 for services 1, 2 and 3 of the same service types is illustrated below.
(1) The network slice upgrade master control unit sends an upgrade instruction to the proxy unit of an NF. The proportion of upgraded service instances is 1:3, that is, only one service instance is upgraded.
(2) The proxy unit parses the NF upgrade package to obtain the V2 version service upgrade package.
(3) The model and data management unit makes a new a copy of V1 version data, parses V2 version model and upgrade script from V2 version service upgrade package, and performs the upgrade script to obtain V2 version data.
(4) The proxy unit pops up service 4, loads the running version V1 locally, loads the model and data of the V1 version from the model and data management unit, and starts to receive and process services.
(5) The load balancing unit transfers all the services on service 1 to service 2, service 3 and service 4, and service 1 will no longer handle those transferred services.
(6) The proxy unit upgrades the service 1 to version V2, and loads the model and data of version V2 from the model and data management unit.
(7) The proxy unit on the NF feeds back the upgrade progress to the network slice upgrade master control unit.

For the upgrade of the whole network slice, it is necessary to coordinate multiple NFs in the network slice end-to-end, and dial test to verify the service instances of each NF upgraded in the network slice end-to-end. For example, in order to support a new feature of the network slice, it is necessary to perform an upgrade in a number of NFs in the network slice, e.g., three gNBs (gNodeB, 5G base stations), two access and mobility management functions (AMFs) and one Unified Data Management (UDM). The upgrade order is: the upgrade in the UDM is carried out first, followed by is the upgrade in the AMFs, and the upgrade in the gNBs is carried out at last. For example, there are two service instances of the same type in the gNB, three service instances of the same type in the MF and three service instances of the same type in the UDM, and each service instance operates in a load sharing manner.

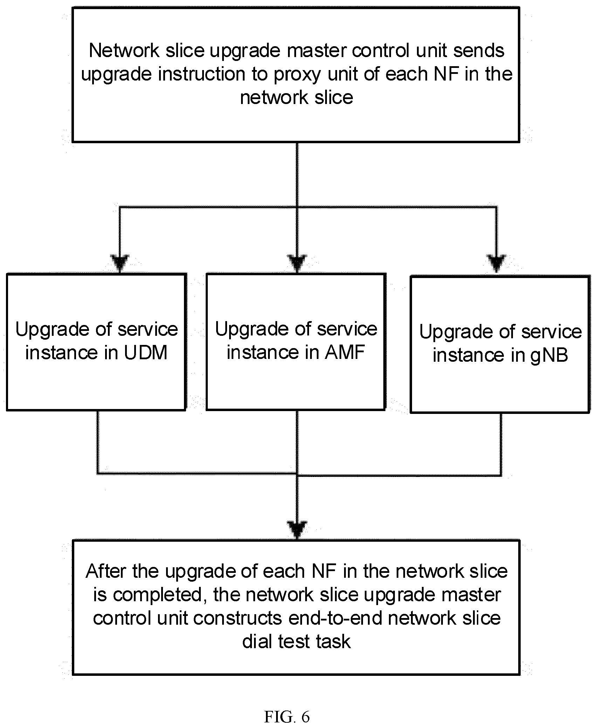

According to the above upgrade order, the upgrade operations of the whole network slice are as follows, as shown in FIG. 6.
(1) Upgrade in the UDM: the network slice upgrade master control unit sends an upgrade instruction to the UDM, and the service instance upgrade proportion is 1:3, that is, only one service instance is upgraded. After the upgrade is completed, the proxy unit on the UDM feeds back the upgrade progress to the network slice upgrade master control unit.
(2) Upgrade in the AMFs: the network slice upgrade master control unit sends an upgrade instruction to the first AMF, and the service instance upgrade proportion is 1:3, that is, only one service instance is upgraded. After the upgrade is completed, the proxy unit on the first AMF feeds back the upgrade progress to the network slice upgrade master control unit. The network slice upgrade master control unit sends an upgrade instruction to the second AMF, and the proportion of upgrading service instances is 1:3, that is, only one service instance is upgraded. After the upgrade is completed, the proxy unit on the second AMF feeds back the upgrade progress to the network slice upgrade master control unit.
(3) Upgrade in the gNBs: the network slice upgrade master control unit sends an upgrade instruction to the first gNB, and the service instance upgrade proportion is 1:2, that is, only one service instance is upgraded. After the upgrade is completed, the proxy unit on the first gNB feeds back the upgrade progress to the network slice upgrade master control unit. The network slice upgrade master control unit then sends upgrade instructions to the second and third gNBs, and the proportion of upgrading service instances is 1:2, that is, only one service instance in each gNB is upgraded. After the upgrades are completed, the proxy units on the second and third gNB feed back the upgrade progress to the network slice upgrade master control unit.
(4) After each NF upgrades a part of the service instances to a new version according to the desired proportion, the network slice upgrade master control unit creates a network slice dial test task, including network slice for dial test, users for dial test, services for dial test and service version for dial test, and the task is sent to each NF under the network slice. The load balancing unit of each NF directs the network slice for dial test, users for dial test and service for dial test to the service instance that has been upgraded to a particular version to verify the service for dial test. If the service dial test verification indicates an abnormal condition, troubleshooting is made to find to cause and the problem. The upgrade will be terminated if necessary, and the network slice rollback plan will be carried out, in which each NF in the network slice carries out the network slice version rollback. If the service dial test verification indicates a normal condition, the network slice upgrade master control unit continues to issue upgrade instructions to upgrade the rest of the service instances of NFs under the coverage of network slices.

The service dial test verification indicates a normal condition, which means end-to-end service dial test verification of the network slice indicates a normal condition, such that the rest of the service instances of NF under the coverage of the network slice can be upgraded successively. In an implementation, the NF belongs exclusively to network slice 1, and there are service instances of the same type and version (including service 1, service 2 and service 3) in this NF, and each service instance operates in a load sharing manner. If service 1 has been upgraded to version V2, service 2, service 3 and service 4 are still in version V1, and service 4 is a temporary service instance popped up by the proxy unit during the upgrade, then service 2 and service 3 shall be upgraded to version V2, and service 4 should be terminated when the upgrade is completed. The operations are as follows.
(1) The network slice upgrade master control unit sends a continual upgrade instruction to the proxy unit on NF;
(2) The load balancing unit transfers all the services on the service 2 to the services 1, 3 and 4. Service 2 will no longer handle those transferred services.
(3) The proxy unit upgrades the service 2 to version V2, and loads the model and data of version V2 from the model and data management unit.
(4) The proxy unit continues to upgrade service 3 in the same way as the upgrading of service 2.
(5) Service 1, Service 2 and Service 3 are all upgraded to V2 version.
(6) The load balancing unit transfers all the services on the service 4 to the services 1, 2 and 3. Service 4 will no longer handle those transferred services.
(7) The proxy unit terminates service 4.
(8) The proxy unit responds to the network slice upgrade master control unit that all services dedicated to the NF have been upgraded successfully.

If the network slice service dial test verification indicates an abnormal condition, the network slice upgrade master control unit needs to perform network slice version rollback for each NF in the network slice according to the network slice rollback plan. Taking the version rollback of a single NF as an example, the version rollback of a single NF includes two scenarios. Scenario 1: The version of service 1 in NF is V2 version and needs to be rollback to V1 version. The versions of service 2, service 3 and service 4 are all V1 version, so there is no need to rollback. In particular, service 4 is a temporary service instance that pops up during the upgrade process, and which shall be terminated after the version rollback is completed. Scenario 2: All services in the NF have been upgraded, and the versions of service 1, service 2 and service 3 are all V2, which is necessary to roll back to V1. The operations of version rollback are as follows.
(1) The network slice upgrade master control unit of the network slice receives the NF upgrade failure message, and carries out operations according to the network slice rollback plan.
(2) The network slice upgrade master control unit issues a network slice version rollback instruction to the proxy unit.
(3) The proxy unit locally extracts the V1 version software package backed up before the upgrade. The model and data management unit locally extracts the V1 model and data backed up before the upgrade.
(4) The proxy unit checks the running service instance and version, and determines which service instance needs version rollback.
(5) If the service 4 does not exist, the proxy unit pops up the service 4, loads the version V1 locally, loads the model and data of the V1 version from the model and data management unit, and starts to receive and process services. If the version of service 1 needs to roll back to V1 version, the load balancing unit will transfer all the services on service 1 to service 2, service 3 and service 4, and service 1 will no longer handle those services. The proxy unit rollbacks the version in service 1 to V1 version, and loads the model and data of the V1 version from the model and data management unit to start receiving and processing services. The load balancing unit distributes the services to service 1 to verify whether the service processing of service 1 is normal. If the service processing on service 1 is abnormal, it is necessary to find the cause of the problem and eliminate the fault. If the service processing on service 1 is normal, that indicates a successful version rollback on service 1.
(6) The proxy unit makes determinations and rolls back the versions of service 2 and service 3 successively, and the method is the same as that of the rollback on service 1.
(7) After the versions of service 1, service 2 and service 3 all fall back to V1 version, the load balancing unit transfers all the services on service 4 to service 1, service 2 and service 3, and service 4 will no longer handle the services. Then the proxy unit terminates service 4, and notifies the network slice upgrade master control unit that the NF rollback is successful.

For the rollback of the whole network slice, it is necessary to perform rollback in multiple NFs in the network slice. For example, the NF involved in the upgrade process of the network slice is: three gNBs, two AMFs and one UDM respectively. Rollback shall be performed if the upgrade fails. Sequential rollback is performed, that is, the rollback is performed in the reverse order of the upgrade order. And if the upgrade order is UDM-AMF-gNB, then the rollback order is gNB-AMF-UDM.

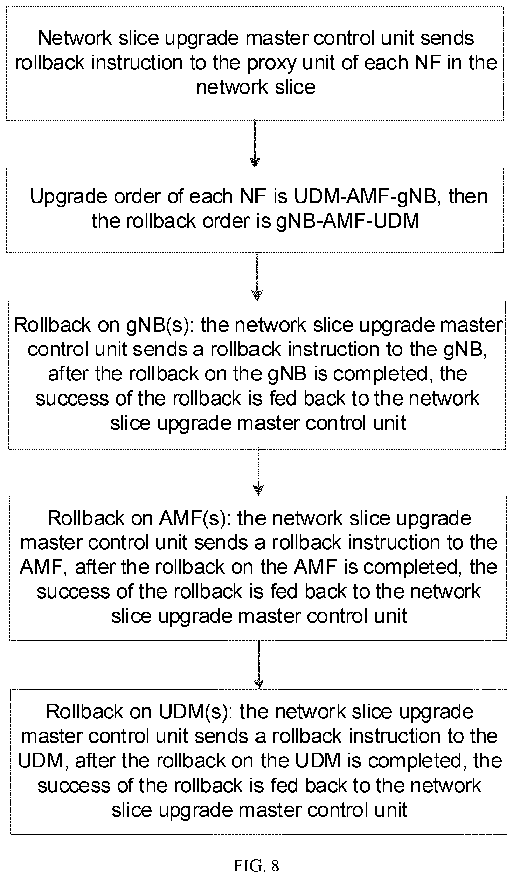

According to the above rollback order, the rollback operations of the whole network slice are as follows, as shown in FIG. 8.
(1) Rollback on gNBs: the network slice upgrade master control unit sends a rollback instruction to the first gNB. After the rollback on the first gNB is completed, the proxy unit on the first gNB feeds back the success of the rollback to the network slice upgrade master control unit. The network slice upgrade master control unit then sends rollback instructions to the second and third gNBs. After the rollbacks on the second and third gNBs are completed, the proxy units on the second and third gNBs feed back the success of the rollbacks to the network slice upgrade master control unit.
(2) Rollback on AMFs: the network slice upgrade master control unit sends a rollback instruction to the first AMF. After the rollback on the first AMF is completed, the proxy unit on the first AMF feeds back the success of the rollback to the network slice upgrade master control unit. The network slice upgrade master control unit sends a rollback instruction to the second AMF. After rollback on the second AMF is completed, the proxy unit on the second AMF feeds back the success of the rollback to the network slice upgrade master control unit.
(3) Rollback on UDM: the network slice upgrade master control unit sends a rollback instruction to the UDM. After the rollback is completed, the proxy unit on the UDM feeds back the success of the rollback to the network slice upgrade master control unit.

The method and the device for upgrading the network slice have the advantages that the wireless access network, the core network and the bearer network are globally upgraded end-to-end at the level of the network slice, and a plurality of NFs within the coverage area of the network slice are upgraded together in a cooperative manner, so that the maintainability of the network is improved. Only a part of the service instances of each NF is upgraded at the same time, and each NF directs the dial test service to the upgraded service instance, and verifies the service processing condition of the new version service instance end to end, and upgrades the rest of the service instances of NF under the coverage of network slices after the verification is passed. If the dial test fails, version rollback in the NFs under the network slice can be performed in order. In addition, the whole process of upgrading, dial testing and rollback in the present application will not impact adversely the routine processing of the end-to-end service of the network slice.

The above are some embodiments of the present disclosure, and the protection scope of the present disclosure is defined by the claims.

## Claims

1. A method for upgrade in a network slice having at least one Network Function, NF, wherein, the method is applied to each NF of the at least one NF, in the network slice in a 5G telecommunication network, wherein, each NF has a plurality of different types of services each having at least one running service instance, and the method comprises,
acquiring version information of each service instance, and receiving an upgrade instruction;
downloading an upgrade package after receiving the upgrade instruction, and simultaneously performing an upgrade to a service instance in each NF according to the upgrade package until each upgrade is completed; wherein, the upgrade instruction comprises a preset upgrade proportion and an upgrade order;
**characterized in that**: performing the upgrade after receiving the upgrade instruction comprises, popping up a temporary service instance that loads a software package, a model and data of a version before the upgrade to start to service receiving and processing, performing the upgrade to each of first service instances after each service on each of the first service instances is transferred to a service instance to which the upgrade will not be performed temporarily and to the temporary service instance, and removing the temporary service instance in response to a success in the upgrade to each of the first service instances, or removing the temporary service instance in response to a completion of a version rollback in response to a failure in the upgrade to one of the first service instances.

2. The method according to claim 1, wherein, before performing the upgrade to a service instance in each NF in the network slice, backing up a software package, a model and data of a version before the upgrade of the service instance.

3. The method according to claim 2, wherein each NF in the network slice is configured to receive a network slice dial test instruction and a network slice version rollback instruction, and after the upgrade to a part of the service instance is completed according to the upgrade instruction, the method further comprises, performing a verification to a service processing condition of each upgraded service instance according to the network slice dial test instruction, and in response to the verification indicating a normal condition, continue to perform the upgrade to a rest of the service instances in each NF until the upgrade of each instance is completed; and in response to the verification indicating an abnormal condition, perform a version rollback according to the network slice version rollback instruction.

4. The method according to any one of claim 2 or 3, wherein, the service instances to which the upgrade is to be performed, comprises a plurality of first service instances, in response to the plurality of first service instances belonging to different NFs, successively performing the upgrade to each of the first service instances separately according to the upgrade proportion and the upgrade order of a respective NF, or simultaneously performing the upgrade to each of the first service instances separately according to the upgrade proportion; and in response to the plurality of first service instances belonging to a same NF, performing the upgrade to each of the first service instances according to the upgrade proportion.

5. The method according to claim 4, wherein performing the version rollback comprises,
after receiving a message indicating a failure in the upgrade of the NF, receiving, by each NF, a network slice version rollback instruction, extracting a software package of version before the upgrade, inquiring about a running service instance and version information of the running service instance, and determining a second service instance to which the version rollback is performed;
extracting the model and the data of the version before the upgrade, and loading the software package, model and data of the version before the upgrade, by the temporary service instance;
transferring each service on the second service instance to the service instance to which the version rollback will not be performed temporarily and to the temporary service instance;
in response to the version rollback to the second service instance being performed, loading the software package, the model and the data of the version before the upgrade to start the service receiving and processing;
diverting each service to the second service instance, performing a verification as to whether the service processing of the second service instance is normal, and in response to a success in the version rollback to the second service instance, transferring each service from the temporary service instance to the second service instance, and removing the temporary service instance.

6. The method according to claim 5, wherein the version rollback of the network slice comprises an entire rollback and a partial rollback, both of the entire rollback and the partial rollback further comprise a sequential rollback, and the entire rollback comprises the rollback in each of service instances that have a successful upgrade and in each of service instances that have a failed upgrade, when a verification on at least one of the service instances in the network slice indicates an abnormal condition after the upgrade; and the partial rollback comprises the rollback only in each of service instances that have a failed upgrade; and the sequential rollback comprises the rollback performed in reverse order with respect to the upgrade order.

7. The method according to claim 1, wherein acquiring the version information of each service instance by each NF in the network slice comprises,
providing, by a Network Slicing Management Function, NSMF, in the network slice, information of a Network Slice Subnet Management Function, NSSMF, instance, network slice instance and network sub-slice instance;
providing, by the NSSMF, information of network sub-slice instances and each NF; and
providing, by each NF, version information of each service instance.

8. A device for upgrade in a network slice in a 5G telecommunication network, wherein, the network slice has at least one Network Function, NF, each NF has a plurality of different types of services each having at least one running service instance, and the device comprises,
a network slice upgrade master control unit, which is configured to inquire about version information of service instance in each NF, in the network slice and issue an upgrade instruction;
at least two model and data management units, each of which is configured to manage a software package, a model and data of each version of service instance in each NF in the network slice;
at least two proxy units, each of which is configured to download an upgrade package after receiving the upgrade instruction by each NF in the network slice, and simultaneously perform an upgrade to a service instance in each NF according to the upgrade package until each upgrade is completed; wherein, the upgrade instruction comprises a preset upgrade proportion and an upgrade order; and
**characterized in that**:
after receiving the upgrade instruction, the proxy units are configured to, pop up a temporary service instance that loads the software package, the model and the data of the version before the upgrade to start service receiving and processing;
the device further comprising at least two load balancing units, wherein the load balancing units are configured to transfer each service on a first service instance to a service instance to which the upgrade will not be performed temporarily and to the temporary service instance; and
the proxy units are configured to perform the upgrade to the first service instance, and remove the temporary service instance in response to a success in the upgrade of each of first service instances, or to remove the temporary service instance in response to a completion of a version rollback in response to a failure in the upgrade of one of the first service instances.

9. The device according to claim 8, wherein the network slice upgrade master control unit is further configured to issue a network slice dial test instruction and a network slice version rollback instruction; and the proxy unit is further configured to: perform a verification, after the upgrade to a portion of the service instances in each NF is completed according to the upgrade instruction, to a service processing condition of the upgraded service instances according to the network slice dial test instruction, and in response to the verification indicating a normal condition, continue to perform the upgrade to a rest of the service instances in each NF until the upgrade to each instance is completed; and in response to the verification indicating an abnormal condition, perform a version rollback according to the network slice version rollback instruction.

10. The device according to claim 8 or 9, wherein, the service instances to which the upgrade is to be performed, comprise a plurality of first service instances, and the proxy units are configured to: in response to the plurality of first service instances belonging to different NFs, successively perform the upgrade to each of the first service instances separately according to the upgrade proportion and the upgrade order of a respective NF, or to simultaneously perform the upgrade to each of the first service instances separately according to the upgrade proportion; and in response to the plurality of first service instances belonging to a same NF, to perform the upgrade to each of the first service instances according to the upgrade proportion.

11. The device according to claim 10, wherein performing the version rollback comprises,
the network slice upgrade master control unit is configured to issue a network slice version rollback instruction after receiving a message indicating a failed upgrade in NF;
the proxy units are configured to receive the network slice version rollback instruction, extract a software package of version before the upgrade, inquire about a running service instance and version information of the running service instance, and determine a second service instance to which the version rollback is performed;
the model and data management units are configured to extract the model and the data of the version before the upgrade, and the temporary service instance is configured to load the software package, model and data of the version before the upgrade;
the load balancing units are configured to transfer each service on the second service instance to the service instance to which the version rollback will not be performed temporarily and to the temporary service instance;
the second service instance is configured to load the software package, the model and the data of the version before the upgrade to start the service receiving and processing, after the proxy units perform version rollback to the second service instance;
the load balancing units are configured to divert each service to the second service instance, perform a verification as to whether the service processing of the second service instance is normal, and in response to a success in the version rollback to the second service instance, the load balancing units are configured to transfer each service from the temporary service instance to the second service instance, and the proxy units are configured to remove the temporary service instance.

12. The device according to claim 11, wherein the version rollback of the network slice comprises an entire rollback and a partial rollback, both of the entire rollback and the partial rollback further comprises a sequential rollback, and the entire rollback comprises the rollback in each of service instances that have a successful upgrade and in each of service instances that have a failed upgrade, when a verification on at least one of the service instances in the network slice indicates an abnormal condition after the upgrade; and the partial rollback comprises the rollback only in each of service instances that have a failed upgrade; and the sequential rollback comprises the rollback performed in reverse order with respect to the upgrade order.

13. The device according to claim 8, wherein the network slice upgrade master control unit is further configured to:
inquire a Network Slicing Management Function, NSMF for information of Network Slice Subnet Management Function, NSSMF, instance, network slice instance and network sub-slice instance;
inquire the NSSMF for information of network sub-slice instance and NF; and
inquire each NF for version information of each service instance.

## Patentansprüche

1. Verfahren zum Upgrade in einer Netzwerkschicht, die mindestens eine Netzwerkfunktion, NF, aufweist, wobei das Verfahren auf jede NF der mindestens einen NF in der Netzwerkschicht in einem 5G-Telekommunikationsnetzwerk angewandt wird, wobei jede NF eine Vielzahl von verschiedenen Typen von Services aufweist, die jeweils mindestens eine laufende Service-Instanz aufweisen, und das Verfahren umfasst:
Erfassen von Versionsinformationen jeder Service-Instanz und Empfangen einer Upgrade-Anweisung;
Herunterladen eines Upgrade-Pakets nach dem Empfangen der Upgrade-Anweisung und gleichzeitiges Durchführen eines Upgrades auf eine Service-Instanz in jeder NF gemäß dem Upgrade-Paket, bis jedes Upgrade vervollständigt ist; wobei die Upgrade-Anweisung einen voreingestellten Upgrade-Anteil und eine Upgrade-Reihenfolge umfasst;
**dadurch gekennzeichnet, dass**:
das Durchführen des Upgrades nach dem Empfangen der Upgrade-Anweisung umfasst: Aufpoppen einer temporären Service-Instanz, die ein Software-Paket, ein Modell und Daten einer Version vor dem Upgrade zum Starten des Service-Empfangens und -Verarbeitens lädt, Durchführen des Upgrades auf jede der ersten Service-Instanzen, nachdem jeder Service auf jeder der ersten Service-Instanzen auf eine Service-Instanz, auf die das Upgrade vorübergehend nicht durchgeführt wird, und auf die temporäre Service-Instanz übertragen wird, und Entfernen der temporären Service-Instanz als Reaktion auf einen Erfolg des Upgrades auf jede der ersten Service-Instanzen oder Entfernen der temporären Service-Instanz als Reaktion auf einen Abschluss eines Version-Rollbacks als Reaktion auf einen Ausfall des Upgrades auf eine der ersten Service-Instanzen.

2. Verfahren nach Anspruch 1, wobei vor dem Durchführen des Upgrades auf eine Service-Instanz in jeder NF in der Netzwerkschicht ein Software-Paket, ein Modell und Daten einer Version vor dem Upgrade der Service-Instanz gesichert werden.

3. Verfahren nach Anspruch 2, wobei jede NF in der Netzwerkschicht konfiguriert ist, um eine Netzwerkschicht-Auswahltest-Anweisung und eine Netzwerkschicht-Version-Rollback-Anweisung zu empfangen, und nachdem das Upgrade auf einen Teil der Service-Instanz gemäß der Upgrade-Anweisung vervollständigt ist, das Verfahren ferner umfasst: Durchführen einer Verifizierung eines Service-Verarbeitungszustandes jeder geupgradten Service-Instanz gemäß der Netzwerkschicht-Auswahltest-Anweisung und als Reaktion auf das Angeben eines normalen Zustandes durch die Verifizierung Fortsetzen des Durchführens des Upgrades auf einen Rest der Service-Instanzen in jeder NF, bis das Upgrade jeder Instanz vervollständigt ist; und als Reaktion auf das Angeben eines anormalen Zustandes durch die Verifizierung Durchführen eines Version-Rollbacks gemäß der Netzwerkschicht-Version-Rollback-Anweisung.

4. Verfahren nach einem der Ansprüche 2 oder 3, wobei die Service-Instanzen, auf die das Upgrade durchgeführt werden soll, eine Vielzahl von ersten Service-Instanzen umfassen, als Reaktion auf die Vielzahl von ersten Service-Instanzen, die zu verschiedenen NF gehören, sukzessives Durchführen des Upgrades auf jede der ersten Service-Instanzen separat gemäß dem Upgrade-Anteil und der Upgrade-Reihenfolge einer jeweiligen NF oder gleichzeitiges Durchführen des Upgrades auf jede der ersten Service-Instanzen separat gemäß dem Upgrade-Anteil; und als Reaktion auf die Vielzahl von ersten Service-Instanzen, die zu einer gleichen NF gehören, Durchführen des Upgrades auf jede der ersten Service-Instanzen gemäß dem Upgrade-Anteil.

5. Verfahren nach Anspruch 4, wobei das Durchführen des Version-Rollbacks umfasst:
nach dem Empfangen einer Nachricht, die einen Ausfall des Upgrades der NF angibt, Empfangen einer Netzwerkschicht-Version-Rollback-Anweisung durch jede NF, Extrahieren eines Software-Pakets einer Version vor dem Upgrade, Abfragen einer laufenden Service-Instanz und von Versionsinformationen der laufenden Service-Instanz und Bestimmen einer zweiten Service-Instanz, auf die das Version-Rollback durchgeführt wird;
Extrahieren des Modells und der Daten der Version vor dem Upgrade und Laden des Software-Pakets, des Modells und der Daten der Version vor dem Upgrade durch die temporäre Service-Instanz;
Übertragen jedes Services auf der zweiten Service-Instanz auf die Service-Instanz, auf die das Version-Rollback nicht vorübergehend durchgeführt wird, und auf die temporäre Service-Instanz;
als Reaktion auf das Durchführen des Version-Rollbacks auf die zweite Service-Instanz Laden des Software-Pakets, des Modells und der Daten der Version vor dem Upgrade zum Starten des Service-Empfangens und -Verarbeitens;
Umleiten jedes Services auf die zweite Service-Instanz, Durchführen einer Verifizierung, ob die Service-Verarbeitung der zweiten Service-Instanz normal ist, und als Reaktion auf einen Erfolg des Version-Rollbacks auf die zweite Service-Instanz Übertragen jedes Services von der temporären Service-Instanz auf die zweite Service-Instanz und Entfernen der temporären Service-Instanz.

6. Verfahren nach Anspruch 5, wobei das Version-Rollback der Netzwerkschicht ein vollständiges Rollback und ein teilweises Rollback umfasst, sowohl das vollständige Rollback als auch das teilweise Rollback ferner ein sequentielles Rollback umfassen und das vollständige Rollback das Rollback in jeder der Service-Instanzen, die ein erfolgreiches Upgrade aufweisen, und in jeder der Service-Instanzen, die ein fehlgeschlagenes Upgrade aufweisen, umfasst, wenn eine Verifizierung auf mindestens einer der Service-Instanzen in der Netzwerkschicht einen anormalen Zustand nach dem Upgrade angibt; und das teilweise Rollback das Rollback nur in jeder der Service-Instanzen umfasst, die ein fehlgeschlagenes Upgrade aufweisen; und das sequentielle Rollback das Rollback umfasst, das in umgekehrter Reihenfolge in Bezug auf die Upgrade-Reihenfolge durchgeführt wird.

7. Verfahren nach Anspruch 1, wobei das Erfassen der Versionsinformationen jeder Service-Instanz durch jede NF in der Netzwerkschicht umfasst:
Bereitstellen, durch eine Netzwerkschicht-Verwaltungsfunktion, NSMF, in der Netzwerkschicht, von Informationen einer Netzwerkschicht-Teilnetz-Verwaltungsfunktion, NSSMF,-Instanz, einer Netzwerkschicht-Instanz und einer Netzwerk-Teilschicht-Instanz;
Bereitstellen, durch die NSSMF, von Informationen von Netzwerk-Teilschicht-Instanzen und jeder NF; und
Bereitstellen, durch jede NF, von Versionsinformationen jeder Service-Instanz.

8. Vorrichtung zum Upgrade in einer Netzwerkschicht in einem 5G-Telekommunikationsnetzwerk, wobei die Netzwerkschicht mindestens eine Netzwerkfunktion, NF, aufweist, jede NF eine Vielzahl von verschiedenen Typen von Services aufweist, die jeweils mindestens eine laufende Service-Instanz aufweisen, und die Vorrichtung umfasst:
eine Netzwerkschicht-Upgrade-Master-Steuereinheit, die konfiguriert ist, um Versionsinformationen einer Service-Instanz in jeder NF in der Netzwerkschicht abzufragen und eine Upgrade-Anweisung auszugeben;
mindestens zwei Modell- und Datenverwaltungseinheiten, von denen jede konfiguriert ist, um ein Software-Paket, ein Modell und Daten jeder Version einer Service-Instanz in jeder NF in der Netzwerkschicht zu verwalten;
mindestens zwei Proxy-Einheiten, von denen jede konfiguriert ist, um ein Upgrade-Paket nach dem Empfangen der Upgrade-Anweisung durch jede NF in der Netzwerkschicht herunterzuladen und gleichzeitig ein Upgrade auf eine Service-Instanz in jeder NF gemäß dem Upgrade-Paket durchzuführen, bis jedes Upgrade vervollständigt ist; wobei die Upgrade-Anweisung einen voreingestellten Upgrade-Anteil und eine Upgrade-Reihenfolge umfasst; und
**dadurch gekennzeichnet, dass**:
nach dem Empfangen der Upgrade-Anweisung die Proxy-Einheiten konfiguriert sind, um eine temporäre Service-Instanz aufzupoppen, die das Software-Paket, das Modell und die Daten der Version vor dem Upgrade zum Starten des Service-Empfangens und -Verarbeitens lädt;
wobei die Vorrichtung ferner mindestens zwei Lastausgleich-Einheiten umfasst, wobei die Lastausgleich-Einheiten konfiguriert sind, um jeden Service auf einer ersten Service-Instanz auf eine Service-Instanz, auf die das Upgrade nicht vorübergehend durchgeführt wird, und auf die temporäre Service-Instanz zu übertragen; und
die Proxy-Einheiten konfiguriert sind, um das Upgrade auf die erste Service-Instanz durchzuführen und die temporäre Service-Instanz als Reaktion auf einen Erfolg des Upgrades jeder der ersten Service-Instanzen zu entfernen oder die temporäre Service-Instanz als Reaktion auf einen Abschluss eines Version-Rollbacks als Reaktion auf einen Ausfall des Upgrades einer der ersten Service-Instanzen zu entfernen.

9. Vorrichtung nach Anspruch 8, wobei die Netzwerkschicht-Upgrade-Master-Steuereinheit ferner konfiguriert ist, um eine Netzwerkschicht-Auswahltest-Anweisung und eine Netzwerkschicht-Version-Rollback-Anweisung auszugeben; und die Proxy-Einheit ferner konfiguriert ist zum: Durchführen einer Verifizierung, nachdem das Upgrade auf einen Teil der Service-Instanzen in jeder NF gemäß der Upgrade-Anweisung vervollständigt ist, eines Service-Verarbeitungszustandes der geupgradten Service-Instanzen gemäß der Netzwerkschicht-Auswahltest-Anweisung und als Reaktion auf das Angeben eines normalen Zustandes durch die Verifizierung Fortsetzen des Durchführens des Upgrades auf einen Rest der Service-Instanzen in jeder NF, bis das Upgrade auf jede Instanz vervollständigt ist; und als Reaktion auf das Angeben eines anormalen Zustandes durch die Verifizierung Durchführen eines Version-Rollbacks gemäß der Netzwerkschicht-Version-Rollback-Anweisung.

10. Vorrichtung nach Anspruch 8 oder 9, wobei die Service-Instanzen, auf die das Upgrade durchgeführt werden soll, eine Vielzahl von ersten Service-Instanzen umfassen und die Proxy-Einheiten konfiguriert sind zum: als Reaktion auf die Vielzahl von ersten Service-Instanzen, die zu verschiedenen NF gehören, sukzessives Durchführen des Upgrades auf jede der ersten Service-Instanzen separat gemäß dem Upgrade-Anteil und der Upgrade-Reihenfolge einer jeweiligen NF oder gleichzeitiges Durchführen des Upgrades auf jede der ersten Service-Instanzen separat gemäß dem Upgrade-Anteil; und als Reaktion auf die Vielzahl von ersten Service-Instanzen, die zu einer gleichen NF gehören, Durchführen des Upgrades auf jede der ersten Service-Instanzen gemäß dem Upgrade-Anteil.

11. Vorrichtung nach Anspruch 10, wobei das Durchführen des Version-Rollbacks umfasst:
die Netzwerkschicht-Upgrade-Master-Steuereinheit ist konfiguriert, um eine Netzwerkschicht-Version-Rollback-Anweisung nach dem Empfangen einer Nachricht auszugeben, die ein fehlgeschlagenes Upgrade in der NF angibt;
die Proxy-Einheiten sind konfiguriert, um die Netzwerkschicht-Version-Rollback-Anweisung zu empfangen, ein Software-Paket einer Version vor dem Upgrade zu extrahieren, eine laufende Service-Instanz und Versionsinformationen der laufenden Service-Instanz abzufragen und eine zweite Service-Instanz zu bestimmen, auf die das Version-Rollback durchgeführt wird;
die Modell- und Datenverwaltungseinheiten sind konfiguriert, um das Modell und die Daten der Version vor dem Upgrade zu extrahieren, und die temporäre Service-Instanz ist konfiguriert, um das Software-Paket, das Modell und die Daten der Version vor dem Upgrade zu laden;
die Lastausgleich-Einheiten sind konfiguriert, um jeden Service auf der zweiten Service-Instanz auf die Service-Instanz, auf die das Version-Rollback nicht vorübergehend durchgeführt wird, und auf die temporäre Service-Instanz zu übertragen;
die zweite Service-Instanz ist konfiguriert, um das Software-Paket, das Modell und die Daten der Version vor dem Upgrade zum Starten des Service-Empfangens und -Verarbeitens zu laden, nachdem die Proxy-Einheiten ein Version-Rollback auf die zweite Service-Instanz durchführen;
die Lastausgleich-Einheiten sind konfiguriert, um jeden Service auf die zweite Service-Instanz umzuleiten, eine Verifizierung durchzuführen, ob die Service-Verarbeitung der zweiten Service-Instanz normal ist, und als Reaktion auf einen Erfolg des Version-Rollbacks auf die zweite Service-Instanz sind die Lastausgleich-Einheiten konfiguriert, um jeden Service von der temporären Service-Instanz auf die zweite Service-Instanz zu übertragen, und die Proxy-Einheiten sind konfiguriert, um die temporäre Service-Instanz zu entfernen.

12. Vorrichtung nach Anspruch 11, wobei das Version-Rollback der Netzwerkschicht ein vollständiges Rollback und ein teilweises Rollback umfasst, sowohl das vollständige Rollback als auch das teilweise Rollback ferner ein sequentielles Rollback umfassen und das vollständige Rollback das Rollback in jeder der Service-Instanzen, die ein erfolgreiches Upgrade aufweisen, und in jeder der Service-Instanzen, die ein fehlgeschlagenes Upgrade aufweisen, umfasst, wenn eine Verifizierung auf mindestens einer der Service-Instanzen in der Netzwerkschicht einen anormalen Zustand nach dem Upgrade angibt; und das teilweise Rollback das Rollback nur in jeder der Service-Instanzen umfasst, die ein fehlgeschlagenes Upgrade aufweisen; und das sequentielle Rollback das Rollback umfasst, das in umgekehrter Reihenfolge in Bezug auf die Upgrade-Reihenfolge durchgeführt wird.

13. Vorrichtung nach Anspruch 8, wobei die Netzwerkschicht-Upgrade-Master-Steuereinheit ferner konfiguriert ist zum:
Abfragen einer Netzwerkschicht-Verwaltungsfunktion, NSMF, nach Informationen einer Netzwerkschicht-Teilnetz-Verwaltungsfunktion, NSSMF,-Instanz, einer Netzwerkschicht-Instanz und einer Netzwerk-Teilschicht-Instanz;
Abfragen der NSSMF nach Informationen einer Netzwerk-Teilschicht-Instanz und einer NF; und
Abfragen jeder NF nach Versionsinformationen jeder Service-Instanz.

## Revendications

1. Procédé de mise à niveau dans une tranche de réseau ayant au moins une fonction de réseau, NF, dans lequel le procédé est appliqué à chaque NF de l'au moins une NF, dans la tranche de réseau dans un réseau de télécommunication 5G, dans lequel chaque NF a une pluralité de types différents de services ayant chacun au moins une instance de service en cours d'exécution, et le procédé comprend les étapes consistant à :
acquérir des informations de version de chaque instance de service, et recevoir une instruction de mise à niveau ;
télécharger un paquet de mise à niveau après avoir reçu l'instruction de mise à niveau, et réaliser simultanément une mise à niveau vers une instance de service dans chaque NF en fonction du paquet de mise à niveau jusqu'à ce que chaque mise à niveau soit complétée ; dans lequel l'instruction de mise à niveau comprend une proportion de mise à niveau prédéfinie et un ordre de mise à niveau ;
**caractérisé en ce que** :
réaliser la mise à niveau après avoir reçu l'instruction de mise à niveau comprend les étapes consistant à extraire une instance de service temporaire qui charge un paquet logiciel, un modèle et des données d'une version avant la mise à niveau pour démarrer la réception et le traitement de service, réaliser la mise à niveau vers chacune des premières instances de service après que chaque service sur chacune des premières instances de service a été transféré vers une instance de service vers laquelle la mise à niveau ne sera pas réalisée temporairement et vers l'instance de service temporaire, et supprimer l'instance de service temporaire en réponse à une réussite de la mise à niveau vers chacune des premières instances de service, ou supprimer l'instance de service temporaire en réponse à une complétion d'un retour en arrière de version en réponse à une défaillance de la mise à niveau vers l'une des premières instances de service.

2. Procédé selon la revendication 1, dans lequel, avant de réaliser la mise à niveau vers une instance de service dans chaque NF dans la tranche de réseau, sauvegarder un paquet logiciel, un modèle et des données d'une version avant la mise à niveau de l'instance de service.

3. Procédé selon la revendication 2, dans lequel chaque NF dans la tranche de réseau est configurée pour recevoir une instruction de test de composition de tranche de réseau et une instruction de retour en arrière de version de tranche de réseau, et après que la mise à niveau vers une partie de l'instance de service est complétée en fonction de l'instruction de mise à niveau, le procédé comprend en outre les étapes consistant à réaliser une vérification d'une condition de traitement de service de chaque instance de service mise à niveau en fonction de l'instruction de test de composition de tranche de réseau, et en réponse à la vérification indiquant une condition normale, continuer à réaliser la mise à niveau vers un reste des instances de service dans chaque NF jusqu'à ce que la mise à niveau de chaque instance soit complétée ; et en réponse à la vérification indiquant une condition anormale, réaliser un retour en arrière de version en fonction de l'instruction de retour en arrière de version de tranche de réseau.

4. Procédé selon l'une quelconque des revendications 2 ou 3, dans lequel, les instances de service vers lesquelles la mise à niveau doit être réalisée, comprennent une pluralité de premières instances de service, en réponse à la pluralité de premières instances de service appartenant à des NF différentes, réaliser successivement la mise à niveau vers chacune des premières instances de service séparément en fonction de la proportion de mise à niveau et de l'ordre de mise à niveau d'une NF respective, ou réaliser simultanément la mise à niveau vers chacune des premières instances de service séparément en fonction de la proportion de mise à niveau ; et en réponse à la pluralité de premières instances de service appartenant à une même NF, réaliser la mise à niveau vers chacune des premières instances de service en fonction de la proportion de mise à niveau.

5. Procédé selon la revendication 4, dans lequel la réalisation du retour en arrière de version comprend les étapes consistant à,
après avoir reçu un message indiquant une défaillance de la mise à niveau de la NF, recevoir, par chaque NF, une instruction de retour en arrière de version de tranche de réseau, extraire un paquet logiciel de version avant la mise à niveau, demander une instance de service en cours d'exécution et des informations de version de l'instance de service en cours d'exécution, et déterminer une seconde instance de service vers laquelle le retour en arrière de version est réalisé ;
extraire le modèle et les données de la version avant la mise à niveau, et charger le paquet logiciel, le modèle et les données de la version avant la mise à niveau, par l'instance de service temporaire ;
transférer chaque service sur la seconde instance de service vers l'instance de service vers laquelle le retour en arrière de version ne sera pas réalisé temporairement et vers l'instance de service temporaire ;
en réponse au retour en arrière de version vers la seconde instance de service qui est réalisé, charger le paquet logiciel, le modèle et les données de la version avant la mise à niveau pour démarrer la réception et le traitement de service ;
détourner chaque service vers la seconde instance de service, réaliser une vérification pour savoir si le traitement de service de la seconde instance de service est normal, et en réponse à une réussite du retour en arrière de version vers la seconde instance de service, transférer chaque service de l'instance de service temporaire vers la seconde instance de service, et supprimer l'instance de service temporaire.

6. Procédé selon la revendication 5, dans lequel le retour en arrière de version de la tranche de réseau comprend un retour en arrière complet et un retour en arrière partiel, à la fois le retour en arrière complet et le retour en arrière partiel comprennent en outre un retour en arrière séquentiel, et le retour en arrière complet comprend le retour en arrière dans chacune des instances de service qui ont une mise à niveau réussie et dans chacune des instances de service qui ont une mise à niveau échouée, lorsqu'une vérification sur au moins l'une des instances de service dans la tranche de réseau indique une condition anormale après la mise à niveau ; et le retour en arrière partiel comprend le retour en arrière uniquement dans chacune des instances de service qui ont une mise à niveau échouée ; et le retour en arrière séquentiel comprend le retour en arrière réalisé dans un ordre inverse par rapport à l'ordre de mise à niveau.

7. Procédé selon la revendication 1, dans lequel l'acquisition des informations de version de chaque instance de service par chaque NF dans la tranche de réseau comprend les étapes consistant à,
fournir, par une fonction de gestion de tranchage de réseau, NSMF, dans la tranche de réseau, des informations d'une instance de fonction de gestion de sous-réseau de tranche de réseau, NSSMF, une instance de tranche de réseau et une instance de sous-tranche de réseau ;
fournir, par la NSSMF, des informations d'instances de sous-tranche de réseau et de chaque NF ; et
fournir, par chaque NF, des informations de version de chaque instance de service.

8. Dispositif de mise à niveau dans une tranche de réseau dans un réseau de télécommunication 5G, dans lequel la tranche de réseau a au moins une fonction de réseau, NF, chaque NF a une pluralité de types différents de services ayant chacun au moins une instance de service en cours d'exécution, et le dispositif comprend :
une unité de contrôle maître de mise à niveau de tranche de réseau, qui est configurée pour demander des informations de version d'une instance de service dans chaque NF, dans la tranche de réseau et émettre une instruction de mise à niveau ;
au moins deux unités de gestion de modèle et de données, dont chacune est configurée pour gérer un paquet logiciel, un modèle et des données de chaque version d'une instance de service dans chaque NF dans la tranche de réseau ;
au moins deux unités mandataires, dont chacune est configurée pour télécharger un paquet de mise à niveau après avoir reçu l'instruction de mise à niveau par chaque NF dans la tranche de réseau, et réaliser simultanément une mise à niveau vers une instance de service dans chaque NF en fonction du paquet de mise à niveau jusqu'à ce que chaque mise à niveau soit complétée ; dans lequel l'instruction de mise à niveau comprend une proportion de mise à niveau prédéfinie et un ordre de mise à niveau ; et
**caractérisé en ce que** :
après avoir reçu l'instruction de mise à niveau, les unités mandataires sont configurées pour extraire une instance de service temporaire qui charge le paquet logiciel, le modèle et les données de la version avant la mise à niveau pour démarrer la réception et le traitement de service ;
le dispositif comprenant en outre au moins deux unités d'équilibrage de charge, dans lequel les unités d'équilibrage de charge sont configurées pour transférer chaque service sur une première instance de service vers une instance de service vers laquelle la mise à niveau ne sera pas réalisée temporairement et vers l'instance de service temporaire ; et
les unités mandataires sont configurées pour réaliser la mise à niveau vers la première instance de service, et supprimer l'instance de service temporaire en réponse à une réussite de la mise à niveau de chacune des premières instances de service, ou pour supprimer l'instance de service temporaire en réponse à une complétion d'un retour en arrière de version en réponse à une défaillance de la mise à niveau de l'une des premières instances de service.

9. Dispositif selon la revendication 8, dans lequel l'unité de contrôle maître de mise à niveau de tranche de réseau est en outre configurée pour émettre une instruction de test de composition de tranche de réseau et une instruction de retour en arrière de version de tranche de réseau ; et l'unité mandataire est en outre configurée pour : réaliser une vérification, après que la mise à niveau vers une partie des instances de service dans chaque NF est complétée en fonction de l'instruction de mise à niveau, d'une condition de traitement de service des instances de service mises à niveau en fonction de l'instruction de test de composition de tranche de réseau, et en réponse à la vérification indiquant une condition normale, continuer à réaliser la mise à niveau vers un reste des instances de service dans chaque NF jusqu'à ce que la mise à niveau vers chaque instance soit complétée ; et en réponse à la vérification indiquant une condition anormale, réaliser un retour en arrière de version en fonction de l'instruction de retour en arrière de version de tranche de réseau.

10. Dispositif selon la revendication 8 ou 9, dans lequel, les instances de service vers lesquelles la mise à niveau doit être réalisée, comprennent une pluralité de premières instances de service, et les unités mandataires sont configurées pour : en réponse à la pluralité de premières instances de service appartenant à des NF différentes, réaliser successivement la mise à niveau vers chacune des premières instances de service séparément en fonction de la proportion de mise à niveau et de l'ordre de mise à niveau d'une NF respective, ou réaliser simultanément la mise à niveau vers chacune des premières instances de service séparément en fonction de la proportion de mise à niveau ; et en réponse à la pluralité de premières instances de service appartenant à une même NF, réaliser la mise à niveau vers chacune des premières instances de service en fonction de la proportion de mise à niveau.

11. Dispositif selon la revendication 10, dans lequel la réalisation du retour en arrière de version comprend les étapes consistant à,
l'unité de contrôle maître de mise à niveau de tranche de réseau est configurée pour émettre une instruction de retour en arrière de version de tranche de réseau après avoir reçu un message indiquant une mise à niveau défaillante dans NF ;
les unités mandataires sont configurées pour recevoir l'instruction de retour en arrière de version de tranche de réseau, extraire un paquet logiciel de version avant la mise à niveau, demander une instance de service en cours d'exécution et des informations de version de l'instance de service en cours d'exécution, et déterminer une seconde instance de service vers laquelle le retour en arrière de version est réalisé ;
les unités de gestion de modèle et de données sont configurées pour extraire le modèle et les données de la version avant la mise à niveau, et l'instance de service temporaire est configurée pour charger le paquet logiciel, le modèle et les données de la version avant la mise à niveau ;
les unités d'équilibrage de charge sont configurées pour transférer chaque service sur la seconde instance de service vers l'instance de service vers laquelle le retour en arrière de version ne sera pas réalisé temporairement et vers l'instance de service temporaire ;
la seconde instance de service est configurée pour charger le paquet logiciel, le modèle et les données de la version avant la mise à niveau pour démarrer la réception et le traitement de service, après que les unités mandataires ont réalisé le retour en arrière de version vers la seconde instance de service ;
les unités d'équilibrage de charge sont configurées pour détourner chaque service vers la seconde instance de service, réaliser une vérification pour savoir si le traitement de service de la seconde instance de service est normal, et en réponse à une réussite du retour en arrière de version vers la seconde instance de service, les unités d'équilibrage de charge sont configurées pour transférer chaque service de l'instance de service temporaire vers la seconde instance de service, et les unités mandataires sont configurées pour supprimer l'instance de service temporaire.

12. Dispositif selon la revendication 11, dans lequel le retour en arrière de version de la tranche de réseau comprend un retour en arrière complet et un retour en arrière partiel, à la fois le retour en arrière complet et le retour en arrière partiel comprennent en outre un retour en arrière séquentiel, et le retour en arrière complet comprend le retour en arrière dans chacune des instances de service qui ont une mise à niveau réussie et dans chacune des instances de service qui ont une mise à niveau échouée, lorsqu'une vérification sur au moins l'une des instances de service dans la tranche de réseau indique une condition anormale après la mise à niveau ; et le retour en arrière partiel comprend le retour en arrière uniquement dans chacune des instances de service qui ont une mise à niveau échouée ; et le retour en arrière séquentiel comprend le retour en arrière réalisé dans un ordre inverse par rapport à l'ordre de mise à niveau.

13. Dispositif selon la revendication 8, dans lequel l'unité de contrôle maître de mise à niveau de tranche de réseau est en outre configurée pour :
demander à une fonction de gestion de tranchage de réseau, NSMF, des informations d'une instance de fonction de gestion de sous-réseau de tranche de réseau, NSSMF, une instance de tranche de réseau et une instance de sous-tranche de réseau ;
demander à la NSSMF des informations d'une instance de sous-tranche de réseau et d'une NF ; et
demander à chaque NF des informations de version de chaque instance de service.
